# EUROPEAN PATENT SPECIFICATION

(11) **EP 4 457 754 B1**
(45) Date of publication and mention of the grant of the patent: **19.08.2026**
(21) Application number: 22836258.8
(22) Date of filing: 20.12.2022
(51) Int. Cl.: G06T 7/11

(54) **DEVICE, SYSTEM AND METHOD FOR SEGMENTATION OF IMAGES**
VORRICHTUNG, SYSTEM UND VERFAHREN ZUR SEGMENTIERUNG VON BILDERN
DISPOSITIF, SYSTÈME ET PROCÉDÉ DE SEGMENTATION D'IMAGES

(30) Priority: 28.12.2021 EP 21217997
(43) Date of publication of application: 06.11.2024
(73) Proprietor: Koninklijke Philips N.V., 5656 AE Eindhoven (NL)
(72) Inventor: SCHMIDT-RICHBERG, Alexander, 5656 AG Eindhoven (NL); BUERGER, Christian, 5656 AG Eindhoven (NL); KLINDER, Tobias, 5656 AG Eindhoven (NL)
(74) Representative: Philips Intellectual Property & Standards
(86) International application number: PCT/EP2022/086827
(87) International publication number: WO 2023/126241

(56) References cited:
- FENG WEI ET AL: "A dual propagation contours technique for semi-automated assessment of systolic and diastolic cardiac function by CMR", JOURNAL OF CARDIOVASCULAR MAGNETIC RESONANCE, BIOMED CENTRAL LTD, LONDON UK, vol. 11, no. 1, 13 August 2009 (2009-08-13), pages 30, XP021059180, ISSN: 1532-429X, DOI: 10.1186/1532-429X-11-30
- CHIU B ET AL: "Fast Femoral Artery Segmentation from Black-Blood MRI", INTELLIGENT COMPUTATION AND BIO-MEDICAL INSTRUMENTATION (ICBMI), 2011 INTERNATIONAL CONFERENCE ON, IEEE, 14 December 2011 (2011-12-14), pages 136 - 139, XP032096609, ISBN: 978-1-4577-1152-7, DOI: 10.1109/ICBMI.2011.60
- QIAO ZHENG ET AL: "3D Consistent & Robust Segmentation of Cardiac Images by Deep Learning with Spatial Propagation", ARXIV.ORG, CORNELL UNIVERSITY LIBRARY, 201 OLIN LIBRARY CORNELL UNIVERSITY ITHACA, NY 14853, 25 April 2018 (2018-04-25), XP081229779
- ROUSSEL ET AL: "Propagation Neural Network for cardiac segmentation", INTERNATIONAL SOCIETY FOR MAGNETIC RESONANCE IN MEDICINE, ISMRM, 2030 ADDISON STREET, 7TH FLOOR, BERKELEY, CA 94704 USA, no. 4729, 26 April 2019 (2019-04-26), XP040712113

## Description

### FIELD OF THE INVENTION

The present invention relates to a device, system and method for segmentation of images.

### BACKGROUND OF THE INVENTION

Annotation of organs and structures is a very common task in many medical applications for diagnosis, planning and treatment. For example, target volumes and organs-at-risk must be segmented or contoured, e.g., for planning a radiation therapy or to determine their volume. Additionally, training any artificial intelligence (AI) based algorithm for organ segmentation usually requires that a huge number of (manually generated) ground truth segmentations is available.

Manual segmentation of three-dimensional image data is a very tedious and time-consuming task. Segmentation tools can principally be divided in two types: i) Slice-by-slice contouring, which is very time-consuming and suffers from inconsistencies between slices; and ii) 3D editing tools (like mesh editing or ball drawing), which are generally more efficient but can have undesired effects on unseen slices. As a remedy, slice propagation approaches have been proposed, which propagate an annotated contour from one slice to the next, taking image information into account. These are, however, usually computationally very expensive, which disrupts the workflow. A real time processing is fundamental for clinical acceptance.

Niels Agerskov, "Adaptable Semi-Automated 3D Segmentation Using Deep Learning with Spatial Slice Propagation", KTH, School of Engineering Sciences in Chemistry, Biotechnology and Health (CBH), 2019, discloses a semi-automated algorithm approaching the segmentation problem in a slice by slice manner utilizing the prediction of a previous slice as a prior for the next. This both allows the algorithm to segment entirely new cases and gives the user the ability to correct faulty slices, propagating the correction throughout. Results on par with current state of the art is achieved within the domain of the training data.

OIAO ZHENG ET AL: "3D Consistent & Robust Segmentation of Cardiac Images by Deep Learning with Spatial Propagation", ARXIV.ORG, CORNELL UNIVERSITY LIBRARY, 201 OLIN LIBRARY CORNELL UNIVERSITY ITHACA, NY 14853, 25 April 2018 discloses a method based on deep learning to perform cardiac segmentation on short axis MRI image stacks iteratively from the top slice (around the base) to the bottom slice (around the apex). At each iteration, a novel variant of U-net is applied to propagate the segmentation of a slice to the adjacent slice below it. In other words, the prediction of a segmentation of a slice is dependent upon the already existing segmentation of an adjacent slice.

CHIU B ET AL: "Fast Femoral Artery Segmentation from Black-Blood MRI", INTELLIGENT COMPUTATION AND BIO-MEDICAL INSTRUMENTATION (lCBMI), 2011 INTERNATIONAL CONFERENCE ON, IEEE, 14 December 2011 discloses an algorithm that combines 2D slice-based segmentation and 3D user editing to allow for efficient plaque burden analysis of 3D MERGE femoral artery images. The 2D slice-based segmentation approach is based on propagating segmentation results of contiguous 2D slices. The 3D image volume was then reformatted using the curved planar reformation (CPR) technique. User editing of the segmented contours was performed on the CPR views taken at different angles.

ROUSSEL ET AL: "Propagation Neural Network for cardiac segmentation", INTERNATIONAL SOCIETY FOR MAGNETIC RESONANCE IN MEDICINE, ISMRM, no. 4729, 26 April 2019 discloses a CNN model that is based on propagating the redundant depth information from slice to slice.

FENG WEI ET AL, "A dual propagation contours technique for semi-automated assessment of systolic and diastolic cardiac function by CMR", JOURNAL OF CARDIOVASCULAR MAGNETIC RESONANCE, BIOMED CENTRAL LTD, LONDON UK, (20090813), vol. 11, no. 1, doi:10.1186/1532-429X-11-30, ISSN 1532-429X, discloses a dual-contour propagation algorithm to propagate contours throughout the cardiac cycle. The results were compared to those obtained with single-contour propagation (using either end-diastolic or end-systolic contours) and commercially available software.

### SUMMARY OF THE INVENTION

It is an object of the present invention to provide a device, system and method for automatic segmentation of images, which significantly reduces the effort of a manual segmentation.

In a first aspect of the present invention a device for automatic segmentation of images is presented comprising:
- an input configured to obtain image data including
   - a first image slice of a plurality of image slices of a 3D image data set,
   - a first segmentation of the first image slice in which at least one object is segmented, and
   - a second image slice of the plurality of image slices of the 3D image data set;
- a processing unit configured to compute a second segmentation of the second image slice based on the obtained image data by applying a trained algorithm or computing system that has been trained on a plurality of segmentations of a plurality of objects in a plurality of image slices onto the obtained image data to propagate the segmentation of the at least one object in the first segmentation from the first image slice to the second image slice and to compute a third segmentation of a third image slice arranged, within the 3D image data set, in between the first and second image slices by applying the trained algorithm or computing system onto the first and second segmentations to propagate the segmentation of the at least one object in the first and second segmentations from the first and second image slices to the third image slice; and
- an output configured to output the second segmentation of the second image slice and the third segmentation of the third image slice.

In a further aspect of the present invention a system for automatic segmentation of images is presented comprising:
- a device configured to segment images as disclosed herein;
- a display configured to display the second segmentation of the second image slice computed by the device; and
a user interface configured to enable a user to select image slices onto which a segmentation shall be propagated and/or to correct the second segmentation computed by the device.

In yet further aspects of the present invention, there are provided a corresponding method, a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, system, computer program and medium have similar and/or identical preferred embodiments as the claimed device, in particular as defined in the dependent claims and as disclosed herein.

The present invention is based on the idea to provide an algorithm or computer system based slice propagation for the segmentation of medical images. The algorithm or computer system, such as a neural network, gets one image slice, the segmentation for that slice, and a second (neighboring, but not necessarily adjacent) image slice as an input. The algorithm or computer system is trained to predict the segmentation of the second slice. The prediction result serves as an 'automatic suggestion'. In an embodiment it may be further edited by the user; for instance, the user may be able to ignore the prediction and perform annotation/segmentation manually.

A major drawback of interactive slice-by-slice annotation (in contrast to 3D editing) are inconsistencies between the slices, which often results in a zig-zagging shape in direction of arrangement of the different slices in a 3D image data set. This is circumvented according to the present invention by applying a consistent algorithm, which learns from the reference slice, e.g., if boundary voxels should be included or excluded in the segmentation, and applies the same policy on all further slices.

The algorithm or computer system is preferably not trained for one specific anatomy or one specific type of objects, but can adapt to any arbitrary anatomy or object that is segmented in the first slice. Based on this algorithm or computer system, the user can process the 3D image data set (e.g., in a slice-by-slice manner) with significantly reduced effort. Further, the problem of inconsistent segmentations between the slices is mitigated by employing an automatic algorithm.

According to an embodiment the processing unit is configured to use a learning system, a neural network, a convolutional neural network, a segmentation network or a U-net-like network as trained algorithm or computing system, which may be implemented as computer program or software for being executed by the processing unit, e.g. a computer or processor. Generally, the architecture or layout of the trained algorithm or computing system is not essential, but e.g. a learning system or neural network with known or conventional architecture may be used for computing the second segmentation.

In another embodiment applying the trained algorithm or computing system onto the first image slice by the processing unit includes:
- identifying, based on the first image slice and the first segmentation, characteristics of the segmented object and/or the segmentation applied to the first image slice,
- identifying one or more of the identified characteristics in the second image slice and
- using the characteristics identified in the first image slice and the second image slice to propagate the segmentation of the at least one object in the first segmentation from the first image slice to the second image slice resulting in the second segmentation of the second image slice.

The characteristics may hereby include one or more of brightness, texture, edges, boundaries, patterns, characteristic structures or points, homogeneity, area, shape, size, or any other implicitly learned feature. The use of one or more of these characteristics enables a practical implementation of the disclosed invention.

The processing unit is further configured to compute a third segmentation of a third image slice. More generally, if the second slice for which the segmentation is supposed to be predicted is not adjacent to the first image slice, intermediate image slices may be filled using slice propagation as disclosed herein. This accelerates the segmentation of a plurality of image slices.

The processing unit may hereby be configured to compute two third segmentations, wherein a first one is computed by propagating the segmentation of the at least one object in the first segmentation from the first image slice to the third image slice and a second one is computed by propagating the segmentation of the at least one object in the second segmentation from the second image slice to the third image slice, and to compute the final third segmentation by weighted interpolation of the two third segmentations.

For instance, weights for the weighted interpolation may be computed based on spatial distance of the respective image slice from third image slice and/or based on similarity of the respective image slice with the third image slice. With increased spatial distance and/or with reduced similarity the weight may be decreased and vice versa. This improves the accuracy of the segmentation of one or more third (i.e. intermediate) image slices.

As another option the processing unit may be configured to compute two or more third segmentations of two or more third image slices arranged, within the 3D image data set, in between the first and second image slices, wherein for computing a third segmentation of a third image slice the one or two segmentations of the respective one or more image slices closest to the third image slice are used. This contributes to acceleration and improvement of accuracy of the segmentation as well.

The processing unit may further be configured to train the algorithm or computing system on a plurality of segmentations of a plurality of objects in a plurality of image slices, wherein the plurality of image slices comprise real images and/or synthetic images. Training is preferably done in advance, but actual segmentation, in particular if verified by a user, may be used for training as well. Thus, in an embodiment the computed second segmentation may be used together with the second image slice, the first segmentation and the first image slice for training the algorithm or computing system. This may also be used for fine-tuning the algorithm or computing system during the annotation/segmentation process. For instance, an optional online-learning component, e.g. as a function of the processing unit, may be provided for this fine-tuning.

In a particular embodiment the processing unit is configured to train the algorithm or computing system by
- selecting a training image data set in which a segmented object is present;
- randomly selecting, from the plurality of training image slices of the training image data set, a first training image slice, in which the segmented object is present;
- randomly selecting, from the plurality of training image slices of the training image data set, a second training image slice, in which the segmented object is present; and
- applying the algorithm or computing system to the randomly selected first and second training image slices.

Such a training is particularly useful for training a learning system or a neural network.

The training data set or the type of object to be used for training from all objects present in training image data sets may be selected by a user, but is preferably selected randomly to ensure that the training is not done for a certain type of objects only, but is done for multiple objects so that the trained algorithm or computing system can be used later for segmentation of multiple types of objects, e.g. multiple anatomies (such as multiple organs or characteristic structures) appearing in image data sets.

In another embodiment the output is configured to output display information for output on a display, the display information including one or more of
- which image slices have been segmented already,
- which image slices have not yet been segmented,
- which image slice have automatically been segmented, wherein the segmentation has not been corrected or verified by a user.
Color coding, text or symbols, highlighting or any other kind of visual expression may be used to convey the respective information to the user. In an implementation a viewing/editing component may be provided, e.g. as a function of the processing unit, that guides the user through the process and supports the slice propagation workflow, e.g. gives feedback on which slices have already been segmented and which have still to be done/checked.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of an embodiment of a system according to the present invention.
Fig. 2 shows a schematic diagram of an embodiment of a device according to the present invention.
Fig. 3 shows a schematic diagram of a first embodiment of a method according to the present invention.
Fig. 4 shows a schematic diagram of a second embodiment of a method according to the present invention.
Fig. 5 shows a schematic diagram of another embodiment of a device according to the present invention.
Fig. 6 shows an example for randomized map generation in computer games.
Fig. 7 shows an exemplary implementation of a GUI element used according to the present invention.

### DETAILED DESCRIPTION OF EMBODIMENTS

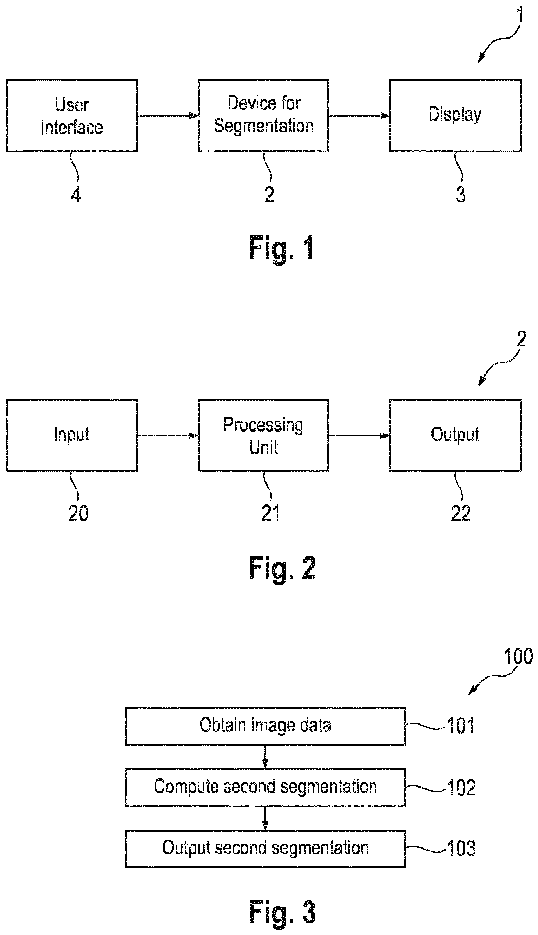

Fig. 1 shows a schematic diagram of an embodiment of a system 1 for segmentation of images according to the present invention, in particular of medical images of a 3D image data set, acquired by an imaging device of any imaging modality (e.g. CT, MR, X-ray, ultrasound, etc.).

The system 1 comprises a device 2 configured to segment images. Details of the device 2 will be described below.

The system 1 further comprises a display 3 configured to display the second segmentation of the second image slice computed by the device 2. The display 3 may e.g. be screen or monitor of a computer, laptop, table or workstation. Preferably, the second segmentation is shown together with or within the second image slice, and optionally the first image slice and the first segmentation are shown as well, e.g. simultaneously in the same or separate windows.

The system 1 further comprises a user interface 4 configured to enable a user (e.g. a clinician, caregiver, etc.) to select image slices onto which a segmentation shall be propagated and/or to correct the second segmentation computed by the device. The user interface 4 may e.g. include one or more of a touch screen, a keyboard, a computer mouse, a pointer or any other means that enable a user to perform the desired function(s).

Fig. 2 shows a schematic diagram of an embodiment of a device 2 for segmentation of images according to the present invention. The device 2 may e.g. be implemented as or in a processor or computer, in software and/or hardware.

The device 2 comprises an input 20 configured to obtain image data. The input 20 may be directly coupled or connected to the imaging device and/or may obtain (i.e. retrieve or receive) the image data (completely or partly) from a storage, buffer, network, bus, etc. The input may thus e.g. be (wired or wireless) communication interfaces or data interfaces, such as a Bluetooth interface, WiFi interface, LAN interface, HDMI interface, direct cable connect, or any other suitable interface allowing signal transfer to the device 2.

The image data include:
- a first image slice of a plurality of image slices of a 3D image data set,
- a first segmentation of the first image slice in which at least one object is segmented, and
- a second image slice of the plurality of image slices of the 3D image data set.

The first image slice may be selected by a user or may be selected automatically. The first segmentation of the first image slice may be made by the user manually or may be made automatically or semi-automatically. The second image slice, which may be directly adjacent to the first image slice or may be separated from the first image slice by one or more intermediate (third) image slices, may be selected by a user or may be selected automatically in order to propagate the segmentation of a particular object made in the first image slice to the second image slice.

The device 2 further comprises a processing unit 21 configured to compute a second segmentation of the second image slice based on the obtained image data. For this purpose, the processing unit 21 applies a trained algorithm or computing system that has been trained on a plurality of segmentations of a plurality of objects in a plurality of image slices onto the obtained image data to propagate the segmentation of the at least one object in the first segmentation from the first image slice to the second image slice.

The processing unit 21 may be any kind of means configured to process the obtained image data and determine the second segmentation there from. It may be implemented in software and/or hardware, e.g. as a programmed processor or computer or app on a user device such as a smartphone, smartwatch, tablet, laptop, PC, workstation, etc.

The device 2 further comprises an output 22 configured to output the second segmentation of the second image slice. The output 22 may generally be any interface that provides the second segmentation, e.g. transmits it to another device or provides it for retrieval by another device (e.g. a smartphone, computer, tablet, etc.). It may thus generally be any (wired or wireless) communication or data interface.

Fig. 3 shows a schematic diagram of a first embodiment of a method 100 for segmentation of images according to the present invention. The steps of the method may be carried out by the device 2, wherein the main steps of the method are carried out by the processing unit 21. The method 100 may e.g. be implemented as computer program running on a computer or processor.

In a first step 101 the image data (comprising first and second image slices and first segmentation) are obtained. In a second step 102 the second segmentation of the second image slice is computed based on the obtained image data. In a third step 103 the second segmentation of the second image slice is outputted.

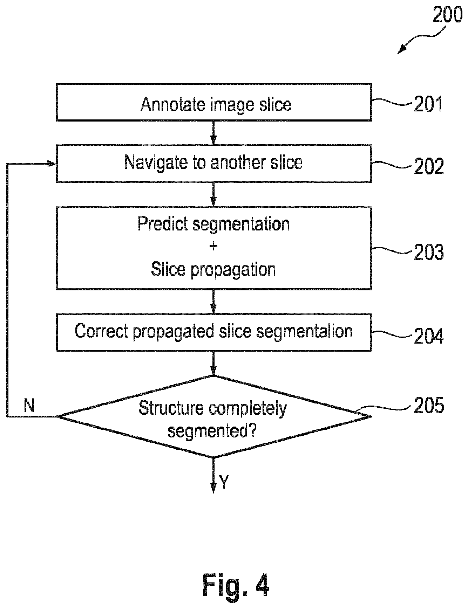

Fig. 4 shows a schematic diagram of a second embodiment of a method 200 for segmentation of images according to the present invention. In a first step 201 the user annotates one arbitrary image slice using e.g. any 2D editing tool. In a second step 202 the user navigates to another (close but not necessarily adjacent) image slice. In a third step 203 an algorithm predicts segmentation from the closest already annotated image slice (or e.g. the two closest slices in each direction) to the current image slice and performs slice propagation to fill the intermediate image slice(s). In a fourth step 204 the user corrects the propagated slice segmentation , if necessary. In a fifth step 205 it is checked if the structure of interest, e.g. a complete organ or anatomy of interest, is completely segmented. If yes, the method 200 is finished. If not, the method is repeated with step 202.

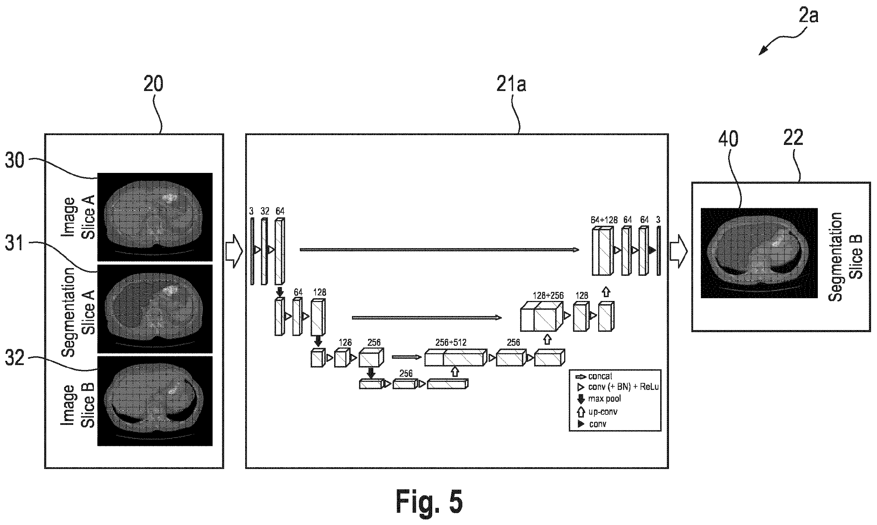

In the following details of an exemplary implementation of the disclosed device are described. Fig. 5 shows a schematic diagram of a corresponding embodiment of a device 2a for segmentation of images according to the present invention. The three pieces of image data at the input 20, i.e. the first image slice 30, the first segmentation 31 of the first image slice, and the second image slice 32, are explicitly depicted in Fig. 5. Further, second segmentation 40 of the second image slice 32 is explicitly depicted in Fig. 5 at the output 22.

The processing unit 21a may generally be configured to perform or implement a trained algorithm or computing system. Preferably, a learning system, a neural network, a convolutional neural network, a segmentation network or a U-net-like network may be used as trained algorithm or computing system.

Generally, an algorithm, computing system or network used according to the present invention may be an arbitrary segmentation network using three input and one or two output channels. For instance, an arbitrary U-Net configuration may be used as e.g. disclosed in Ronneberger O., Fischer P., Brox T. (2015) U-Net: Convolutional Networks for Biomedical Image Segmentation. In: Navab N., Hornegger J., Wells W., Frangi A. (eds) Medical Image Computing and Computer-Assisted Intervention - MICCAI 2015. MICCAI 2015. Lecture Notes in Computer Science, vol 9351. Springer, Cham. https://doi.org/10.1007/978-3-319-24574-4_28. In other implementations, a 2D U-Net configuration with 3 levels, 3x3 convolution kernels, and 16/32/64 feature maps on each level, trained with a minibatch-size of 8, AdaDelta optimization, a learning rate of 0.0008 and a L2 regularization of 0.0002 may be used. Other implementations and types of neural networks may be used as well.

Based on this information the skilled person is able to implement the approach of the present disclosure. Training of the algorithm, computing system or network, as described in more detail below, will allow it to learn segmenting an arbitrary structure in the target slice without relying on learned anatomical knowledge. Instead, information about the target structure is derived from the segmented reference slice. This information may comprise knowledge about which structure is to be segmented and about how similar reference slice and target slice are, and accordingly, how much the target segmentation is allowed to derive from the reference segmentation.

The particular implementation or architecture of such an algorithm, system or network is thus generally not essential, but a standard learning system or neural network may be used for implementing the processing unit. In the implementation depicted in Fig. 5, for the slice propagation core algorithm, a U-Net-like network may be chosen. The network is designed to take three input channels: one slice of the 3D image (the first image slice 30), a reference segmentation for that slice (manually annotated or previously generated; the first segmentation 31), and a second spatially close image slice, which is to be segmented (the second image slice 32). The output is the segmentation of the second slice (the second segmentation 40).

In an extension of this architecture, the network takes multiple segmented slices as input and considers the entirety of them to predict the target slice. Further, a succession of predicted and corrected slices can be interpreted as a temporal sequence and used to train a recurrent network. In this way, the network would improve in the course of the segmentation of one volume (i.e., a 3D image data set).

The training process may be configured as follows: The network should not be trained to propagate segmentations of one anatomy, but instead be independent of a specific structure. For that reason, segmentations of different structures are generally used during training. To this end, two preferred approaches (or a mixture of the two) may be used for training.

In a first approach, the training data set is composed of many images of different body regions and with different structures segmented. To collect a training sample, the algorithm would then:
a) select a random image from the set;
b) select a random label value present in the image;
c) select a random slice in which the label value is present; and
d) select a second close image slice in which the label value is also present.
In this context, label values indicate specific structures in a label image. These are specific to the task at hand. For instance, all voxels that belong to the left kidney have a value of 1, right kidney 2 and liver 3. For training the proposed algorithm, for each training a specific structure is selected (e.g., the liver). The label image is the binarized (0: background, 1: liver) image and used as reference and target annotation.

The training set should be as heterogeneous as possible and cover structures of different appearance, i.e., vary in size, shape, grey values, textures, boundary, etc. Thus, one or more characteristics of the segmented object and/or the segmentation applied to the first image slice may be identified in the second image slice and used to propagate the segmentation of the at least one object in the first segmentation from the first image slice to the second image slice resulting in the second segmentation of the second image slice. These characteristics include one or more of brightness, texture, edges, boundaries, patterns, characteristic structures or points, homogeneity, area, shape, size, or any other implicitly learned feature. This operation makes the network less dependent on a specific anatomy.

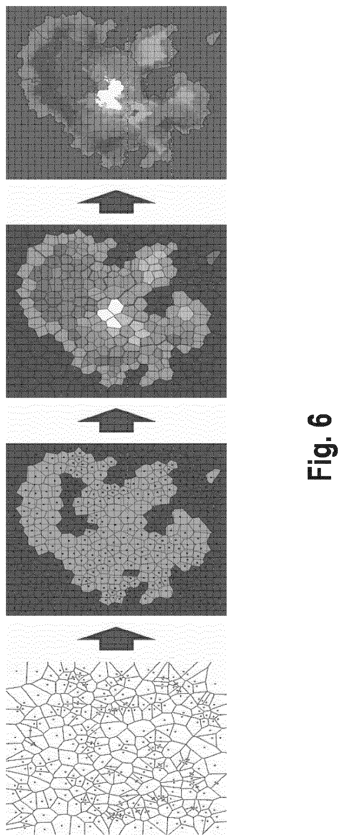

In a second approach, the training set is composed of synthetic images (and, optionally, one or more real images). To generate images, methods for map generation for computer games based on random noise or polygons can be adapted to the problem, as illustrated in Fig. 6 showing an example for randomized map generation in computer games (as currently disclosed at http://www-cs-students.stanford.edu/~amitp/game-programming/polygon-map-generation/) . This approach can be employed to create synthetic images for training the slice propagation network . Regions of the synthetic images may then be labelled and used for training. In this way, the network becomes fully independent of a specific anatomy.

The algorithm for slice propagation can be employed in the workflow described above in a straightforward manner by segmenting the structure step-by-step. Alternatively, a "filling" mode can be implemented: Initially, a first slice in an arbitrary position is manually annotated. Then, the segmentation is propagated to a second slice in a certain distance and manually corrected. Finally, all slices between the two annotated slices are segmented using slice propagation. In an embodiment, a neural network may be applied to both reference slices and a weighted interpolation between the resulting probabilities may be used to compute the proposed segmentation. The weights can be determined taking the spatial distance or image content (e.g., similarity) into account. The weight may be higher, the smaller the spatial distance is and/or the higher the similarity is.

For instance, if there are slices 1 and 6 annotated and it is desired to propagate to slice 5. Let *S1→5* and *S6→5* be the propagated results from these slices. The weights may stem from a simple linear interpolation. This means, the target would be given by *S1,6→5=15*S1*→*5 +45*S6-5* (in this example *S6→5* has higher impact because it is closer and presumably more similar to the target slice).

To be seamlessly integrated into the workflow, a user interface, such as a GUI component, may be used to support the user. This component may provide information about one or more of:
- which slices have been manually segmented or segmented by label propagation and verified (by correcting the result of the propagation, if necessary);
- which slices have been segmented by label propagation and not yet verified/corrected; and
- which slices have yet to be processed.

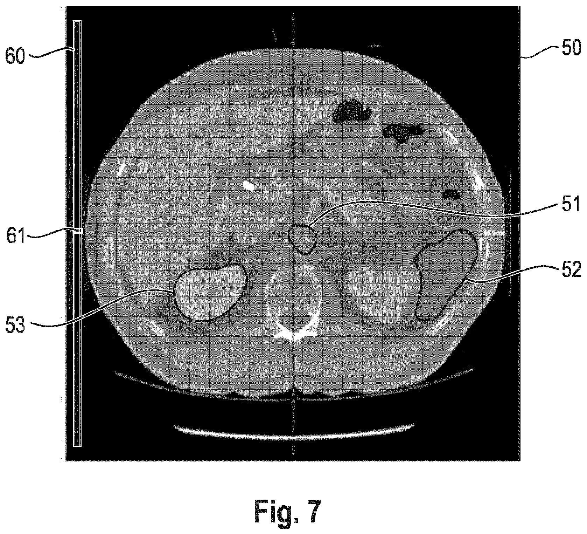

Fig. 7 shows an exemplary implementation of such a GUI element. In the image slice 50 three objects 51, 52, 53 (indicated e.g. by different colors) are segmented. A vertical bar 60, on the left hand side, represents all slices in the image data set, e.g. as a number of boxed on top of each other representing different slices in vertical direction through a certain body region (e.g. the torso or the head) of a patient.

A highlighted box 61 on this vertical bar 60 indicates the position of the currently displayed slice 50 within the 3D image data set. The highlighting may e.g. be made by an emphasized contour (e.g. a white or dashed or bold contour) around the box 61. Further, a certain color or hatching (or other visible indication) of the box (e.g. a green color filling) may be made to indicate that the currently displayed slice 50 is segmented manually or propagated and verified. In other embodiments different indications of the box may be made for a manually segmented slice and a propagated and verified slice.

One or more further boxes on the vertical bar 60 may be highlighted, e.g. to indicate another slice for which the segmentation has been propagated and verified or for which the segmentation has been propagated but not yet verified (e.g. using a different color filling of a corresponding box, such as a yellow color filling).

Optionally, the algorithm or computing system (e.g. a neural network) may be automatically refined by learning during the segmentation process. On this behalf, a training step may be executed with the created sample as input and the corrected output (or accepted output without correction) as target. In this way, the algorithm / computing system would slowly adapt to a specific structure or organ as well as the preferences of the user (for example, where exactly the boundary is defined). This improves the accuracy and further reduces the manual effort. However, if a new structure is to be segmented, the model may be "reset" to the general base model.

Training a model on various anatomy (and modality) yields a generic model for editing which is supposed to be robust against the anatomy to be segmented. While this is very appealing for many applications, it might also be desirable to train a whole set of editing networks for very specific conditions (e.g., CT, liver, non-contrast + further attributes (e.g., patient age, gender) etc.). During training only corresponding image data is selected. During practical application, the appropriate model may then be automatically selected for editing (e.g., by selecting the network based on available information (e.g. DICOM information) combined with some anatomy detection understanding which organ to be annotated). Alternatively, the user can select the optimal model out of a list of suggested trained networks.

The present invention may generally be used in all applications that involve a manual segmentation of structures. Further, it is useful for generating ground truth data for training AI-based automatic segmentation algorithms. Further, it is relevant for all imaging and advanced visualization workstations such as Picture Archiving and Communication System (PACS) and Image Signal Processor (ISP), but also for radiotherapy planning.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Device (2, 2a) for segmentation of images, the device comprising:
- an input (20) configured to obtain image data including
- a first image slice of a plurality of image slices of a 3D image data set,
- a first segmentation of the first image slice in which at least one object is segmented, and
- a second image slice of the plurality of image slices of the 3D image data set;
- a processing unit (21, 21a) configured to compute a second segmentation of the second image slice based on the obtained image data by applying a trained algorithm or computing system that has been trained on a plurality of segmentations of a plurality of objects in a plurality of image slices onto the obtained image data to propagate the segmentation of the at least one object in the first segmentation from the first image slice to the second image slice and to compute a third segmentation of a third image slice arranged, within the 3D image data set, in between the first and second image slices by applying the trained algorithm or computing system onto the first and second segmentations to propagate the segmentation of the at least one object in the first and second segmentations from the first and second image slices to the third image slice; and
- an output (22) configured to output the second segmentation of the second image slice and the third segmentation of the third image slice.

2. Device as claimed in claim 1,
wherein the processing unit (21, 21a) is configured to use a learning system, a neural network, a convolutional neural network, a segmentation network or a U-net-like network as trained algorithm or computing system.

3. Device as claimed in any one of the preceding claims,
wherein applying the trained algorithm or computing system onto the first image slice by the processing unit (21) includes:
- identifying, based on the first image slice and the first segmentation, characteristics of the segmented object and/or the segmentation applied to the first image slice,
- identifying one or more of the identified characteristics in the second image slice and
- using the characteristics identified in the first image slice and the second image slice to propagate the segmentation of the at least one object in the first segmentation from the first image slice to the second image slice resulting in the second segmentation of the second image slice.

4. Device as claimed in claim 3,
wherein the characteristics include one or more of brightness, texture, edges, boundaries, patterns, characteristic structures or points, homogeneity, area, shape, size, or any other implicitly learned feature.

5. Device as claimed in any one of the precding claims,
wherein the processing unit (21, 21a) is configured to compute two third segmentations, wherein a first one is computed by propagating the segmentation of the at least one object in the first segmentation from the first image slice to the third image slice and a second one is computed by propagating the segmentation of the at least one object in the second segmentation from the second image slice to the third image slice, and to compute the final third segmentation by weighted interpolation of the two third segmentations.

6. Device as claimed in claim 5,
wherein the processing unit (21, 21a) is configured to compute weights for the weighted interpolation based on spatial distance of a respective image slice from third image slice and/or based on similarity of the respective image slice with the third image slice.

7. Device as claimed in any one of the preceding claims,
wherein the processing unit (21, 21a) is configured to compute a third segmentation of each of two or more third image slices arranged, within the 3D image data set, in between the first and second image slices, wherein for computing a third segmentation of a third image slice the one or two segmentations of the respective one or more image slices closest to the third image slice are used.

8. Device as claimed in any one of the preceding claims,
wherein the processing unit (21, 21a) is configured to train the algorithm or computing system on a plurality of segmentations of a plurality of objects in a plurality of image slices, wherein the plurality of image slices comprise real images and/or synthetic images.

9. Device as claimed in claim 8,
wherein the processing unit (21, 21a) is configured to train the algorithm or computing system by
- selecting a training image data set in which a segmented object is present;
- randomly selecting, from the plurality of training image slices of the training image data set, a first training image slice, in which the segmented object is present;
- randomly selecting, from the plurality of training image slices of the training image data set, a second training image slice, in which the segmented object is present; and
- applying the algorithm or computing system to the randomly selected first and second training image slices.

10. Device as claimed in claim 8,
wherein the processing unit (21, 21a) is configured to
- randomly select the training data set or the type of object to be used for training from all objects present in training image data sets

11. Device as claimed in any one of the preceding claims,
wherein the output (22) is configured to output display information for output on a display, the display information including one or more of
- which image slices have been segmented already,
- which image slices have not yet been segmented,
- which image slice have automatically been segmented, wherein the segmentation has not been corrected or verified by a user.

12. System (1) for segmentation of images, the system comprising:
- a device (2, 2a) configured to segment images as defined in any one of the preceding claims;
- a display (3) configured to display the second segmentation of the second image slice computed by the device; and
a user interface (4) configured to enable a user to select image slices onto which a segmentation shall be propagated and/or to correct the second segmentation computed by the device.

13. Computer implemented method for segmentation of images, the method comprising:
- obtaining image data including
- a first image slice of a plurality of image slices of a 3D image data set,
- a first segmentation of the first image slice in which at least one object is segmented, and
- a second image slice of the plurality of image slices of the 3D image data set;
- computing a second segmentation of the second image slice based on the obtained image data by applying a trained algorithm or computing system that has been trained on a plurality of segmentations of a plurality of objects in a plurality of image slices onto the obtained image data to propagate the segmentation of the at least one object in the first segmentation from the first image slice to the second image slice;
- computing a third segmentation of a third image slice arranged, within the 3D image data set, in between the first and second image slices by applying the trained algorithm or computing system onto the first and second segmentations to propagate the segmentation of the at least one object in the first and second segmentations from the first and second image slices to the third image slice; and
- outputting the second segmentation of the second image slice and the third segmentation of the third image slice.

14. Computer program comprising program code means for causing a computer to carry out the steps of the method as claimed in claim 13 when said computer program is carried out on the computer.

15. A non-transitory computer-readable recording medium that stores therein the computer program as claimed in claim 14, which, when executed by a processor, causes the computer implemented method as claimed in claim 13 to be performed.

## Patentansprüche

1. Vorrichtung (2, 2a) zur Segmentierung von Bildern, wobei die Vorrichtung umfasst:
- einen Eingang (20), welcher dazu konfiguriert ist, Bilddaten zu erhalten, welche beinhalten:
- einen ersten Bildausschnitt aus einer Vielzahl von Bildausschnitten eines 3D-Bilddatensatzes,
- eine erste Segmentierung des ersten Bildausschnitts, in welchem zumindest ein Objekt segmentiert ist, und
- einen zweiten Bildausschnitt aus der Vielzahl von Bildausschnitten des 3D-Bilddatensatzes,
- eine Verarbeitungseinheit (21, 21a), welche dazu konfiguriert ist, eine zweite Segmentierung des zweiten Bildausschnitts basierend auf den erhaltenen Bilddaten durch Anwenden eines trainierten Algorithmus oder Rechensystems, welches anhand einer Vielzahl von Segmentierungen einer Vielzahl von Objekten in einer Vielzahl von Bildausschnitten trainiert wurde, auf die erhaltenen Bilddaten zu berechnen, um die Segmentierung des zumindest einen Objekts in der ersten Segmentierung von dem ersten Bildausschnitt an den zweiten Bildausschnitt weiterzugeben, und um eine dritte Segmentierung eines dritten Bildausschnitts, welcher innerhalb des 3D-Bilddatensatzes zwischen dem ersten und zweiten Bildausschnitt angeordnet ist, durch Anwenden des trainierten Algorithmus oder Rechensystems auf die erste und zweite Segmentierung zu berechnen, um die Segmentierung des zumindest einen Objekts in der ersten und zweiten Segmentierung von dem ersten und zweiten Bildausschnitt an den dritten Bildausschnitt weiterzugeben; und
- einen Ausgang (22), welcher dazu konfiguriert ist, die zweite Segmentierung des zweiten Bildausschnitts und die dritte Segmentierung des dritten Bildausschnitts auszugeben.

2. Vorrichtung wie in Anspruch 1 beansprucht,
wobei die Verarbeitungseinheit (21, 21a) dazu konfiguriert ist, ein Lernsystem, ein neuronales Netz, ein neuronales Faltungsnetzwerk, ein Segmentierungsnetzwerk oder ein U-Net-ähnliches Netzwerk als trainierten Algorithmus oder Rechensystem verwendet.

3. Vorrichtung nach einem der vorstehenden Ansprüche,
wobei Anwenden des trainierten Algorithmus oder Rechensystems auf den ersten Bildausschnitt durch die Verarbeitungseinheit (21) beinhaltet:
- Identifizieren von Merkmalen des segmentierten Objekts und/oder der auf den ersten Bildausschnitt angewendeten Segmentierung basierend auf dem ersten Bildausschnitt und der ersten Segmentierung,
- Identifizieren eines oder mehrerer der identifizierten Merkmale in dem zweiten Bildausschnitt und
- Verwenden der in dem ersten Bildausschnitt und in dem zweiten Bildausschnitt identifizierten Merkmale, um die Segmentierung des zumindest einen Objekts in der ersten Segmentierung von dem ersten Bildausschnitt an den zweiten Bildausschnitt weiterzugeben, was zu der zweiten Segmentierung des zweiten Bildausschnitts führt.

4. Vorrichtung wie in Anspruch 3 beansprucht,
wobei die Merkmale eines oder mehrerer von Helligkeit, Textur, Kanten, Grenzen, Muster, charakteristischen Strukturen oder Punkten, Homogenität, Fläche, Form, Größe oder jede andere implizit erlernte Funktion beinhalten.

5. Vorrichtung wie in einem der vorstehenden Ansprüche beansprucht,
wobei die Verarbeitungseinheit (21, 21a) dazu konfiguriert ist, zwei dritte Segmentierungen zu berechnen, wobei eine erste durch Weitergeben der Segmentierung des zumindest einen Objekts in der ersten Segmentierung von dem ersten Bildausschnitt an den dritten Bildausschnitt berechnet wird, und eine zweite durch Weitergeben der Segmentierung des zumindest einen Objekts in der zweiten Segmentierung von dem zweiten Bildausschnitt an den dritten Bildausschnitt berechnet wird, und um die endgültige dritte Segmentierung durch gewichtete Interpolation der zwei dritten Segmentierungen zu berechnen.

6. Vorrichtung wie in Anspruch 5 beansprucht,
wobei die Verarbeitungseinheit (21, 21a) dazu konfiguriert ist, Gewichte für die gewichtete Interpolation basierend auf räumlicher Entfernung eines jeweiligen Bildausschnitts von einem dritten Bildausschnitt und/oder basierend auf Ähnlichkeit des jeweiligen Bildausschnitts mit dem dritten Bildausschnitt zu berechnen.

7. Vorrichtung nach einem der vorstehenden Ansprüche,
wobei die Verarbeitungseinheit (21, 21a) dazu konfiguriert ist, eine dritte Segmentierung jedes von zwei oder mehr dritten Bildausschnitten zu berechnen, welche innerhalb des 3D-Bilddatensatzes zwischen dem ersten und zweiten Bildausschnitt angeordnet sind, wobei zum Berechnen einer dritten Segmentierung eines dritten Bildausschnittes die eine oder zwei Segmentierungen des jeweiligen einen oder der mehreren Bildausschnitte verwendet werden, welche dem dritten Bildausschnitt am nächsten liegen.

8. Vorrichtung nach einem der vorstehenden Ansprüche,
wobei die Verarbeitungseinheit (21, 21a) dazu konfiguriert ist, den Algorithmus oder das Rechensystem anhand einer Vielzahl von Segmentierungen einer Vielzahl von Objekten in einer Vielzahl von Bildausschnitten zu trainieren, wobei die Vielzahl von Bildausschnitten reale Bilder und/oder synthetische Bilder umfasst.

9. Vorrichtung wie in Anspruch 8 beansprucht,
wobei die Verarbeitungseinheit (21, 21a) dazu konfiguriert ist, den Algorithmus oder das Rechensystem wie folgt zu trainieren:
- Auswählen eines Trainingsbilddatensatzes, in welchem ein segmentiertes Objekt vorhanden ist;
- zufälliges Auswählen eines ersten Trainingsbildausschnitts aus der Vielzahl der Trainingsbildausschnitte des Trainingsbilddatensatzes, in welchem das segmentierte Objekt vorhanden ist;
- zufälliges Auswählen eines zweiten Trainingsbildausschnitts aus der Vielzahl der Trainingsbildausschnitte des Trainingsbilddatensatzes, in welchem das segmentierte Objekt vorhanden ist; und
- Anwenden des trainierten Algorithmus oder Rechensystems auf den zufällig ausgewählten ersten und zweiten Trainingsbildausschnitt,

10. Vorrichtung wie in Anspruch 8 beansprucht,
wobei die Verarbeitungseinheit (21, 21a) dazu konfiguriert ist:
- den Trainingsdatensatz oder den Typ des Objekt, welcher für das Training verwendet werden soll, aus allen in den Trainingsbilddatensätzen vorhandenen Objekten zufällig auszuwählen.

11. Vorrichtung nach einem der vorstehenden Ansprüche,
wobei der Ausgang (22) dazu konfiguriert ist, Anzeigeinformationen zur Ausgabe auf einer Anzeige auszugeben, wobei die Anzeigeinformationen einen oder mehrere der folgenden Punkte beinhalten:
- welche Bildausschnitte bereits segmentiert wurden,
- welche Bildausschnitte noch nicht segmentiert wurden,
- welche Bildausschnitte automatisch segmentiert wurden, wobei die Segmentierung nicht von einem Benutzer korrigiert oder überprüft wurde.

12. System (1) zur Segmentierung von Bildern, wobei das System umfasst:
- eine Vorrichtung (2, 2a), welche dazu konfiguriert ist, Bilder wie in einem der vorstehenden Ansprüche definiert zu segmentieren,
- eine Anzeige (3), welche dazu konfiguriert ist, die zweite Segmentierung des zweiten Bildausschnitts anzuzeigen, welche von der Vorrichtung berechnet wurde; und
eine Benutzeroberfläche (4), welche dazu konfiguriert ist, einem Benutzer zu ermöglichen, Bildausschnitte auszuwählen, an welche eine Segmentierung weitergegeben werden soll und/oder die von der Vorrichtung berechnete zweite Segmentierung zu korrigieren.

13. Computerimplementiertes Verfahren zur Segmentierung von Bildern, wobei das Verfahren umfasst:
- Erhalten von Bilddaten, welche beinhalten:
- einen ersten Bildausschnitt aus einer Vielzahl von Bildausschnitten eines 3D-Bilddatensatzes,
- eine erste Segmentierung des ersten Bildausschnitts, in welchem zumindest ein Objekt segmentiert ist, und
- einen zweiten Bildausschnitt aus der Vielzahl von Bildausschnitten des 3D-Bilddatensatzes,
- Berechnen einer zweiten Segmentierung des zweiten Bildausschnitts basierend auf den erhaltenen Bilddaten durch Anwenden eines trainierten Algorithmus oder Rechensystems, welches anhand einer Vielzahl von Segmentierungen einer Vielzahl von Objekten in einer Vielzahl von Bildausschnitten trainiert wurde, auf die erhaltenen Bilddaten, um die Segmentierung des zumindest einen Objekts in der ersten Segmentierung von dem ersten Bildausschnitt an den zweiten Bildausschnitt weiterzugeben;
- Berechnen einer dritten Segmentierung eines dritten Bildausschnitts, welcher innerhalb des 3D-Bilddatensatzes zwischen dem ersten und zweiten Bildausschnitt angeordnet ist, durch Anwenden des trainierten Algorithmus oder Rechensystems auf die erste und zweite Segmentierung, um die Segmentierung des zumindest einen Objekts in der ersten und zweiten Segmentierung von dem ersten und zweiten Bildausschnitt an den dritten Bildausschnitt weiterzugeben; und
- Ausgeben der zweiten Segmentierung des zweiten Bildausschnitts und der dritten Segmentierung des dritten Bildausschnitts.

14. Computerprogramm, das Programmcodemittel umfasst, um einen Computer zu veranlassen, die Schritte des Verfahrens nach Anspruch 13 auszuführen, wenn das Computerprogramm auf dem Computer ausgeführt wird.

15. Nichtflüchtiges computerlesbares Aufzeichnungsmedium, welches das Computerprogrammprodukt nach Anspruch 14 darin speichert, welches, wenn es von einem Prozessor ausgeführt wird, veranlasst, dass das computerimplementierte Verfahren nach Anspruch 13 durchgeführt wird.

## Revendications

1. Dispositif (2, 2a) de segmentation d'images, le dispositif comprenant :
- une entrée (20) configurée pour obtenir des données d'image, incluant
- une première tranche d'image parmi une pluralité de tranches d'image d'un ensemble de données d'images 3D,
- une première segmentation de la première tranche d'image dans laquelle au moins un objet est segmenté, et
- une deuxième tranche d'image parmi la pluralité de tranches d'image de l'ensemble de données d'images 3D ;
- une unité de traitement (21, 21a) configurée pour calculer une deuxième segmentation de la deuxième tranche d'image sur la base des données d'image obtenues en appliquant un algorithme ou un système informatique entraîné qui a été entraîné sur une pluralité de segmentations d'une pluralité d'objets dans une pluralité de tranches d'image sur les données d'images obtenues afin de propager la segmentation du au moins un objet de la première segmentation de la première tranche d'image à la deuxième tranche d'image et pour calculer une troisième segmentation d'une troisième tranche d'image agencée, dans l'ensemble de données d'images 3D, entre les première et deuxième tranches d'image en appliquant l'algorithme ou le système informatique entraîné aux première et deuxième segmentations afin de propager la segmentation du au moins un objet des première et deuxième segmentations des première et deuxième tranches d'image à la troisième tranche d'image ; et
- une sortie (22) configurée pour produire la deuxième segmentation de la deuxième tranche d'image et la troisième segmentation de la troisième tranche d'image.

2. Dispositif selon la revendication 1,
dans lequel l'unité de traitement (21, 21a) est configurée pour utiliser un système d'apprentissage, un réseau neuronal, un réseau neuronal convolutif, un réseau de segmentation ou un réseau de type U-net comme algorithme ou système informatique entraîné.

3. Dispositif selon l'une quelconque des revendications précédentes,
dans lequel l'application de l'algorithme ou du système informatique entraîné à la première tranche d'image par l'unité de traitement (21) inclut :
- l'identification, sur la base de la première tranche d'image et de la première segmentation, de caractéristiques de l'objet segmenté et/ou de la segmentation appliquée à la première tranche d'image,
- l'identification d'une ou plusieurs des caractéristiques identifiées dans la deuxième tranche d'image et
- l'utilisation des caractéristiques identifiées dans la première tranche d'image et la deuxième tranche d'image pour propager la segmentation du au moins un objet dans la première segmentation de la première tranche d'image à la deuxième tranche d'image, ce qui donne lieu à la deuxième segmentation de la deuxième tranche d'image.

4. Dispositif selon la revendication 3,
dans lequel les caractéristiques incluent un ou plusieurs parmi la luminosité, la texture, les bords, les limites, les motifs, les structures ou points caractéristiques, l'homogénéité, la surface, la forme, la taille ou toute autre caractéristique apprise implicitement.

5. Dispositif selon l'une quelconque des revendications précédentes,
dans lequel l'unité de traitement (21, 21a) est configurée pour calculer deux troisièmes segmentations, dans lequel la première est calculée en propageant la segmentation du au moins un objet dans la première segmentation de la première tranche d'image à la troisième tranche d'image et la seconde est calculée en propageant la segmentation du au moins un objet dans la deuxième segmentation de la deuxième tranche d'image à la troisième tranche d'image, et pour calculer la troisième segmentation finale par interpolation pondérée des deux troisièmes segmentations.

6. Dispositif selon la revendication 5,
dans lequel l'unité de traitement (21, 21a) est configurée pour calculer des pondérations de l'interpolation pondérée sur la base de la distance spatiale d'une tranche d'image respective par rapport à la troisième tranche d'image et/ou sur la base de la similarité de la tranche d'image respective avec la troisième tranche d'image.

7. Dispositif selon l'une quelconque des revendications précédentes,
dans lequel l'unité de traitement (21, 21a) est configurée pour calculer une troisième segmentation de chacune des deux ou plusieurs troisièmes tranches d'image agencées, dans l'ensemble de données d'images 3D, entre les première et deuxième tranches d'image, dans lequel pour calculer une troisième segmentation d'une troisième tranche d'image, les une ou deux segmentations des une ou plusieurs tranches d'image respectives les plus proches de la troisième tranche d'image sont utilisées.

8. Dispositif selon l'une quelconque des revendications précédentes,
dans lequel l'unité de traitement (21, 21a) est configurée pour entraîner l'algorithme ou le système informatique sur une pluralité de segmentations d'une pluralité d'objets dans une pluralité de tranches d'image, dans lequel la pluralité de tranches d'image comprend des images réelles et/ou des images synthétiques.

9. Dispositif selon la revendication 8,
dans lequel l'unité de traitement (21, 21a) est configurée pour entraîner l'algorithme ou le système informatique par
- la sélection d'un ensemble de données d'images d'entraînement dans lequel un objet segmenté est présent ;
- la sélection aléatoire, parmi la pluralité de tranches d'image d'entraînement de l'ensemble de données d'images d'entraînement, d'une première tranche d'image d'entraînement dans laquelle l'objet segmenté est présent ;
- la sélection aléatoire, parmi la pluralité de tranches d'image d'entraînement de l'ensemble de données d'images d'entraînement, d'une seconde tranche d'image d'entraînement dans laquelle l'objet segmenté est présent ; et
- l'application de l'algorithme ou du système informatique aux première et seconde tranches d'image d'entraînement sélectionnées aléatoirement.

10. Dispositif selon la revendication 8,
dans lequel l'unité de traitement (21, 21a) est configurée pour
- sélectionner aléatoirement l'ensemble de données d'entraînement ou le type d'objet à utiliser pour l'entraînement parmi tous les objets présents dans les ensembles de données d'images d'entraînement.

11. Dispositif selon l'une quelconque des revendications précédentes,
dans lequel la sortie (22) est configurée pour délivrer en sortie des informations d'affichage sur un écran, les informations d'affichage incluant un ou plusieurs parmi
- les tranches d'image qui ont déjà été segmentées,
- les tranches d'image qui n'ont pas encore été segmentées,
- la tranche d'image qui a été segmentée automatiquement, dans lequel la segmentation n'a pas été corrigée ou vérifiée par un utilisateur.

12. Système (1) de segmentation d'images, le système comprenant :
- un dispositif (2, 2a) configuré pour segmenter des images selon l'une quelconque des revendications précédentes ;
- un écran (3) configuré pour afficher la deuxième segmentation de la deuxième tranche d'image calculée par le dispositif ; et
une interface utilisateur (4) configurée pour permettre à un utilisateur de sélectionner des tranches d'image sur lesquelles une segmentation doit être propagée et/ou pour corriger la deuxième segmentation calculée par le dispositif.

13. Procédé mis en œuvre par ordinateur de segmentation d'images, le procédé comprenant :
- l'obtention de données d'image, incluant
- une première tranche d'image parmi une pluralité de tranches d'image d'un ensemble de données d'images 3D,
- une première segmentation de la première tranche d'image dans laquelle au moins un objet est segmenté, et
- une deuxième tranche d'image parmi la pluralité de tranches d'image de l'ensemble de données d'images 3D ;
- le calcul d'une deuxième segmentation de la deuxième tranche d'image sur la base des données d'image obtenues en appliquant un algorithme ou un système informatique entraîné qui a été entraîné sur une pluralité de segmentations d'une pluralité d'objets dans une pluralité de tranches d'image sur les données d'image obtenues pour propager la segmentation du au moins un objet dans la première segmentation de la première tranche d'image à la deuxième tranche d'image ;
- le calcul d'une troisième segmentation d'une troisième tranche d'image agencée, au sein de l'ensemble de données d'images 3D, entre les première et deuxième tranches d'image en appliquant l'algorithme ou le système informatique entraîné aux première et deuxième segmentations pour propager la segmentation du au moins un objet des première et deuxième segmentations des première et deuxième tranches d'image à la troisième tranche d'image ; et
- la délivrance en sortie de la deuxième segmentation de la deuxième tranche d'image et de la troisième segmentation de la troisième tranche d'image.

14. Programme informatique comprenant des moyens de code de programme pour amener un ordinateur à exécuter les étapes du procédé selon la revendication 13 lorsque ledit programme informatique est exécuté sur l'ordinateur.

15. Support d'enregistrement non-transitoire lisible par ordinateur sur lequel est stocké le programme informatique selon la revendication 14, lequel, lorsqu'il est exécuté par un processeur, amène le procédé mis en œuvre par ordinateur selon la revendication 13 à être réalisé.
